# EUROPÄISCHE PATENTANMELDUNG

(11) **EP 3 720 121 A1**
(43) Veröffentlichungstag der Anmeldung: **07.10.2020**
(21) Anmeldenummer: 20167673.1
(22) Anmeldetag: 02.04.2020
(51) Int. Cl.: H04N 7/18, E03F 7/12

(54) **SYSTEM UND VERFAHREN ZUR DATENÜBERTRAGUNG IN ROHRINSPEKTIONS- UND/ODER WARTUNGSSYSTEMEN**

(30) Priorität: 02.04.2019 DE 102019108614
(71) Anmelder: iPEK International GmbH, 87477 Sulzberg (DE)
(72) Erfinder: Endler, Hannes, 87439 Kempten (DE)
(74) Vertreter: 2s-ip Schramm Schneider Bertagnoll Patent- und Rechtsanwälte Part mbB

(57) **Zusammenfassung**

Bereit gestellt wird ein Rohrinspektions- und/oder Wartungssystem (1), aufweisend eine Kontrolleinrichtung (10), eine Bildaufnahmeeinrichtung (20) und eine Vorschubeinrichtung (30), wobei
- die Bildaufnahmeeinrichtung (20) mit der Vorschubeinrichtung (30) mechanisch koppelbar ist,
- die Bildaufnahmeeinrichtung (20) und die Vorschubeinrichtung (30) über eine erste Kommunikationsverbindung (40a) miteinander operativ verbunden sind,
- die Vorschubeinrichtung (30) und die Kontrolleinrichtung (10) über eine zweite Kommunikationsverbindung (40b) miteinander operativ verbunden sind,
- die Vorschubeinrichtung (30) eine Verarbeitungseinheit (50) aufweist, die mit der ersten Kommunikationsverbindung (40a) und mit der zweiten Kommunikationsverbindung (40b) operativ verbunden ist, wobei die Verarbeitungseinheit (50) angepasst ist,
- Bilddaten der Bildaufnahmeeinrichtung (20) über die erste Kommunikationsverbindung (40a) zu empfangen,
- die empfangenen Bilddaten zu verarbeiten, und
- die verarbeiteten Bilddaten über die zweite Kommunikationsverbindung (40b) an die Kontrolleinrichtung (10) zu übertragen.

Bereit gestellt wird ferner ein entsprechend angepasstes Verfahren.

## Beschreibung

### Gebiet der Erfindung

Die Erfindung betrifft ein Rohrinspektions- und/oder Wartungssystem zur Inspektion und/oder Wartung eines Rohres, aufweisend eine Kontrolleinrichtung, eine Bildaufnahmeeinrichtung und eine Vorschubeinrichtung, wobei die von der Bildaufnahmeeinrichtung aufgenommenen Bild- und/oder Videodaten an die Kontrolleinrichtung übertragen werden, sowie ein Verfahren zur Datenübertragung in einem Rohrinspektions- und/oder Wartungssystem.

### Hintergrund der Erfindung

Zur Durchführung einer Rohrinspektion und/oder Wartung von Rohren und Kanälen ist es bekannt, sogenannte Rohrinspektions- und/oder Wartungssysteme zu verwenden, die in das jeweilige Rohr / in den jeweiligen Kanal eingebracht und darin verfahren werden können. Sowohl Rohrinspektions- als auch Wartungssysteme können Kameras aufweisen, mit denen Bilder oder Videos während der Inspektion bzw. während der Wartung aufgenommen werden können.

Die aufgenommenen Bilder bzw. Videos müssen an eine Kontrolleinrichtung außerhalb des Rohres übertragen werden, wo sie von einem Personal ausgewertet werden können. Für die Aufnahme der Bilder und Videos können sowohl analoge als auch digitale Kamerasysteme verwendet werden.

Die von den Kameras aufgenommenen Bilder bzw. Videos werden über eine Koaxialleitung oder eine Glasfaserleitung an die Kontrolleinrichtung übertragen. Diese Leitungen befinden sich in der Regel innerhalb eines Kabels, in welchem weitere Leitungen für die Spannungsversorgung der Kamera vorhanden sein können.

Solche Kameras können fest an einem Fahrwagen oder an einem Schiebeaal montiert sein, wobei die für die Übertragung der Bilder bzw. Videos vorgesehenen Leitungen von der Kamera durch den Fahrwagen bzw. durch den Schiebeaal hindurch bis zur Kontrolleinrichtung geführt sind. Eine für die Datenübertragung erforderliche Verarbeitungseinrichtung ist hierbei in dem Kameragehäuse bzw. in der Kamera selbst angeordnet. Dies hat den Nachteil, dass die Verarbeitungseinrichtung der Kamera auf die Kontrolleinrichtung (oder umgekehrt) abgestimmt sein muss, damit die Kontrolleinrichtung die Bild- bzw. Videodaten korrekt empfangen und auswerten kann. Zudem ist ein Austausch der Kamera aufgrund bei einer festen Montage der Kamera an dem Fahrwagen bzw. an dem Schiebeaal nicht immer ohne weiteres möglich. Sofern ein Austausch der Kamera möglich ist, muss diese bzw. die Verarbeitungseinrichtung der Kamera an die Fähigkeiten der Kontrolleinrichtung angepasst sein. Anderenfalls müsste die Kontrolleinrichtung ebenfalls ausgetauscht werden.

### Aufgabe der Erfindung

Aufgabe der vorliegenden Erfindung ist es daher, ein Rohrinspektions- und/oder Wartungssystem der eingangs genannten Art und ein entsprechendes Verfahren zur Datenübertragung in einem Rohrinspektions- und/oder Wartungssystem bereitzustellen, die einen einfachen und flexiblen Austausch von Kamerasystemen und eine flexiblere Übertragung der Bild- und/oder Videodaten ermöglichen.

### Erfindungsgemäße Lösung

Erfindungsgemäß wird diese Aufgabe mit einem Rohrinspektions- und/oder Wartungssystem und einem Verfahren zur Datenübertragung in einem erfindungsgemäßen Rohrinspektions- und/oder Wartungssystem nach den unabhängigen Ansprüchen gelöst. Vorteilhafte Ausgestaltungen und Weiterbildungen der Erfindung sind in den jeweiligen abhängigen Ansprüchen angegeben.

Bereitgestellt wird demnach ein Rohrinspektions- und/oder Wartungssystem zur Inspektion und/oder Wartung eines Rohres, aufweisend eine Kontrolleinrichtung, eine Bildaufnahmeeinrichtung und eine Vorschubeinrichtung, wobei
- die Bildaufnahmeeinrichtung mit der Vorschubeinrichtung mechanisch, vorzugsweise lösbar, koppelbar ist, um mit der Vorschubeinrichtung die Bildaufnahmeeinrichtung in dem Rohr zu bewegen,
- die Bildaufnahmeeinrichtung und die Vorschubeinrichtung über eine erste Kommunikationsverbindung miteinander operativ verbunden sind,
- die Vorschubeinrichtung und die Kontrolleinrichtung über eine zweite Kommunikationsverbindung miteinander operativ verbunden sind,
- die Vorschubeinrichtung eine Verarbeitungseinheit aufweist, die mit der ersten Kommunikationsverbindung und mit der zweiten Kommunikationsverbindung operativ verbunden ist, wobei die Verarbeitungseinheit angepasst ist,
   - Bilddaten der Bildaufnahmeeinrichtung über die erste Kommunikationsverbindung zu empfangen,
   - die empfangenen Bilddaten zu verarbeiten, und
   - die verarbeiteten Bilddaten über die zweite Kommunikationsverbindung an die Kontrolleinrichtung zu übertragen.

Dadurch dass die Verarbeitungseinheit in der Vorschubeinrichtung, etwa in einem Fahrwagen oder einem Schiebeaal, angeordnet ist, kann die vollständige Verarbeitung der von der Bildaufnahmeeinrichtung aufgenommenen Bild- bzw. Videodaten in der Vorschubeinrichtung abgewickelt werden. Die Verarbeitungseinheit bzw. die Vorschubeinrichtung können unterschiedliche physikalische Schnittstellen zum Anschluss der Bildaufnahmeeinrichtung aufweisen, wobei die Verarbeitungseinheit, je nachdem an welcher Schnittstelle die Bildaufnahmeeinrichtung angeschlossen ist, die von der Bildaufnahmeeinrichtung empfangenen Bild- bzw. Videodaten entsprechend verarbeiten und an die Kontrolleinrichtung übertragen kann. Dadurch können beliebige Bildaufnahmeeinrichtungen mit der Vorschubeinrichtung gekoppelt werden. Zur Übertragung der von der Verarbeitungseinheit verarbeiteten Bilddaten an die Kontrolleinrichtung können ebenfalls unterschiedliche physikalische Schnittstellen bereitgestellt werden, sodass die Bilddaten beispielsweise über ein Kupferkabel (etwa über ein Twisted-Pair- oder Koaxialkabel, oder über ein Lichtwellenleiterkabel) übertragen werden können.

Es können aber nicht nur unterschiedliche Bildaufnahmeeinrichtung an die Verarbeitungseinheit angeschlossen. Vorteilhaft ist es weiterhin, dass mehrere, auch verschiedene, Bildaufnahmeeinrichtung gleichzeitig an die Verarbeitungseinheit angeschlossen werden können, etwa eine vorwärts gerichtete und eine rückwärts gerichtete Kamera.

Da der Übertragungsweg zwischen der Bildaufnahmeeinrichtung und der Vorschubeinrichtung in der Regel sehr kurz und der Übertragungsweg zwischen der Vorschubeinrichtung und der Kontrolleinrichtung in der Regel sehr lang ist, können für die Datenübertragung zwischen der Bildaufnahmeeinrichtung und der Vorschubeinrichtung für kurze Übertragungswege optimierte Übertragungsmedien, und für die Datenübertragung zwischen der Vorschubeinrichtung und der Kontrolleinrichtung für lange Datenübertragungswege optimierte Übertragungsmedien verwendet werden.

Ein weiterer Vorteil, die Verarbeitungseinrichtung in der Vorschubeinheit vorzusehen, liegt darin, dass die Kamera bzw. Kamerasysteme deutlich günstiger und mit einer erheblich geringeren Komplexität bereitgestellt werden können, da in den Kamerasystemen auf entsprechende Verarbeitungseinheiten verzichtet werden kann.

Zudem ist der in einem Kameragehäuse zur Verfügung stehende Platz, insbesondere bei Kameras, die in der Rohrinspektion zum Einsatz kommen, stark limitiert, was zu einer hohen Komplexität beim Verbauen der Verarbeitungseinrichtung in dem Kameragehäuse führen kann. Auf Standardkomponenten für die Realisierung der Verarbeitungseinrichtung innerhalb des Kameragehäuses muss daher meist verzichtet werden, wohingegen beim Vorsehen der Verarbeitungseinrichtung in der Vorschubeinheit solche Standardkomponenten verwendet werden können.

Kameraeinheiten sind aufgrund ihrer Anordnung an der Vorschubeinheit (meist vorne am Fahrwagen und ungeschützt vor mechanischen Einflüssen) empfindlicher gegen mechanische Einwirkungen. Hierbei ist es von Vorteil, wenn die Kameraeinheit in einem Servicefall weniger komplex ausgeführt ist.

Die Signalverarbeitungseinrichtung und / oder die Signalübertragungseinrichtung können als digitaler Signalprozessor (DSP) oder als ASIC implementiert sein.

Die Verarbeitungseinheit kann zumindest eine Signalverarbeitungseinrichtung und eine mit dieser operativ verbundenen Signalübertragungseinrichtung aufweisen, wobei
- die Signalverarbeitungseinrichtung angepasst ist, die Bilddaten der Bildaufnahmeeinrichtung zu empfangen, die empfangenen Bilddaten zu verarbeiten und die verarbeiteten Bilddaten an die Signalübertragungseinrichtung zu übertragen, und
- die Signalübertragungseinrichtung angepasst ist, die von der Signalverarbeitungseinrichtung empfangenen Bilddaten an die Kontrolleinrichtung zu übertragen.

Vorteilhaft ist es, wenn das Verarbeiten der von der Signalverarbeitungseinrichtung empfangenen Bilddaten
- ein Digitalisieren von analog empfangenen Bilddaten und ein Komprimieren der digitalisierten Bilddaten, oder
- ein Komprimieren von digital empfangenen Bilddaten
umfasst, wobei die Signalverarbeitungseinrichtung zum Komprimieren der Bilddaten eine Komprimierungseinheit aufweist.

Hochwertige Komprimierungseinheiten (die beispielsweise DSP oder ASIC ausgestaltet sein können) besitzen meist eine hohe Verlustleistung, sodass es vorteilhaft ist, die Signalverarbeitungseinrichtung in der Vorschubeinheit, etwa in einem Fahrwagen, anzuordnen. Aufgrund der großen Größe des Gehäuses der Vorschubeinheit kann die Verlustleistung bzw. die Verlustwärme deutlich besser abgeführt werden, als es in einem kleinen Kameragehäuse möglich wäre.

Hoch aufgelöste Videos benötigen zur Übertragung eine hohe Bandbreite, weswegen hohe Anforderungen an die Übertragungsstrecke (z.B. Kabel) gestellt werden. Kabel, die die notwendigen Bedingungen erfüllen, sind meist sehr schwer und besitzen einen großen Außendurchmesser. Aufgrund des Gewichtes des Kabels sind nur kurze Inspektionsstrecken möglich, da der Fahrwagen das Kabel hinter sich herziehen muss. Durch das Komprimieren der hochaufgelösten Videodaten in der Signalverarbeitungseinrichtung der Vorschubeinheit kann die benötigte Übertragungsbandbreite zur Datenübertragung erheblich verringert werden. Gleichzeitig können auch die an die Kabel gestellten Anforderungen verringert werden, sodass einfachere und vor allem leichtere Kabel verwendet werden können. Die effektiven Inspektionsstrecken können so deutlich vergrößert werden.

Die zweite Kommunikationsverbindung kann zumindest abschnittsweise ein Kupferkabel oder ein Glasfaserkabel sein.

Vorteilhaft ist es, wenn die Signalübertragungseinrichtung angepasst ist, die digitalisierten und komprimierten Bilddaten gemäß einem vorbestimmten Übertragungsstandard, insbesondere BroadR-Reach, an die Kontrolleinrichtung zu übertragen, wobei die Signalverarbeitungseinrichtung oder die Signalübertragungseinrichtung weiter angepasst sind, die digitalisierten und komprimierten Bilddaten gemäß dem vorbestimmten Übertragungsstandard aufzubereiten.

Die Kontrolleinrichtung kann eine Signalempfangseinrichtung und eine Anzeige-/Bedieneinheit aufweisen, wobei die Signalempfangseinrichtung mit der zweiten Kommunikationsverbindung gekoppelt ist und angepasst ist
- die Bilddaten von der Signalübertragungseinrichtung zu empfangen, und
- die empfangenen Bilddaten zu verarbeiten und für die Anzeige an der Anzeige-/Bedieneinheit aufzubereiten.

Die Kontrolleinrichtung kann ferner eine Kabeltrommel aufweisen, an der die Signalempfangseinrichtung angeordnet ist.

Durch das Anordnen der Signalempfangseinrichtung an der Kabeltrommel, können beliebige Anzeige-/Bedieneinheiten in dem Rohrinspektions- und/oder Wartungssystem verwendet werden. Die Signalempfangseinrichtung kann einerseits unterschiedliche physikalische Schnittstellen zum Anschluss von Anzeige-/Bedieneinheiten vorsehen. Andererseits kann die Signalempfangseinrichtung unterschiedliche physikalische Schnittstellen zum Koppeln der Signalempfangseinrichtung mit der Verarbeitungseinheit der Vorschubeinrichtung aufweisen. Die Anzeige-/Bedieneinheit kann so kostengünstiger und weniger komplex bereitgestellt werden.

Bereit gestellt wird ferner ein Verfahren zur Datenübertragung in einem Rohrinspektions- und/oder Wartungssystem, wobei das Rohrinspektions- und/oder Wartungssystem zumindest eine Kontrolleinrichtung, eine Bildaufnahmeeinrichtung und einer Vorschubeinrichtung aufweist, wobei
- von der Bildaufnahmeeinrichtung aufgenommene Bilddaten über eine erste Kommunikationsverbindung von der Bildaufnahmeeinrichtung an die Vorschubeinrichtung übertragen werden,
- eine Verarbeitungseinheit der Vorschubeinrichtung
   - die empfangenen Bilddaten verarbeitet, und
   - die verarbeiteten Bilddaten über eine zweite Kommunikationsverbindung an die Kontrolleinrichtung überträgt,
wobei die Bildaufnahmeeinrichtung und die Vorschubeinrichtung lösbar miteinander gekoppelt werden.

Vorteilhaft ist es, wenn
- eine Signalverarbeitungseinrichtung der Verarbeitungseinheit die Bilddaten der Bildaufnahmeeinrichtung empfängt, die empfangenen Bilddaten verarbeitet und die verarbeiteten Bilddaten an eine Signalübertragungseinrichtung der der Verarbeitungseinheit überträgt, und
- die Signalübertragungseinrichtung die von der Signalverarbeitungseinrichtung empfangenen Bilddaten an die Kontrolleinrichtung zu überträgt,
   wobei beim Verarbeiten der von der Signalverarbeitungseinrichtung empfangenen Bilddaten
- analog empfangene Bilddaten digitalisiert und die digitalisierten Bilddaten komprimiert werden, oder
- digital empfangene Bilddaten komprimiert werden.

Vorteilhaft kann es ferner sein, wenn die Signalübertragungseinrichtung die digitalisierten und komprimierten Bilddaten gemäß einem vorbestimmten Übertragungsstandard, insbesondere BroadR-Reach, an die Kontrolleinrichtung überträgt, wobei die Signalverarbeitungseinrichtung oder die Signalübertragungseinrichtung die digitalisierten und komprimierten Bilddaten gemäß dem vorbestimmten Übertragungsstandard aufbereiten.

Ferner kann es vorteilhaft sein, wenn eine Signalempfangseinrichtung der Kontrolleinrichtung die Bilddaten von der Signalübertragungseinrichtung empfängt und die empfangenen Bilddaten für die Anzeige an einer Anzeige-/Bedieneinheit Kontrolleinrichtung aufbereitet.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- **Fig. 1**: ein erstes Ausführungsbeispiel eines erfindungsgemäßen Rohrinspektions- und/oder Wartungssystems;
- **Fig. 2**: ein zweites Ausführungsbeispiel eines erfindungsgemäßen Rohrinspektions- und/oder Wartungssystems;
- **Fig. 3**: ein drittes Ausführungsbeispiel eines erfindungsgemäßen Rohrinspektions- und/oder Wartungssystems; und
- **Fig. 4**: ein viertes Ausführungsbeispiel eines erfindungsgemäßen Rohrinspektions- und/oder Wartungssystems.

### Detaillierte Beschreibung der Erfindung

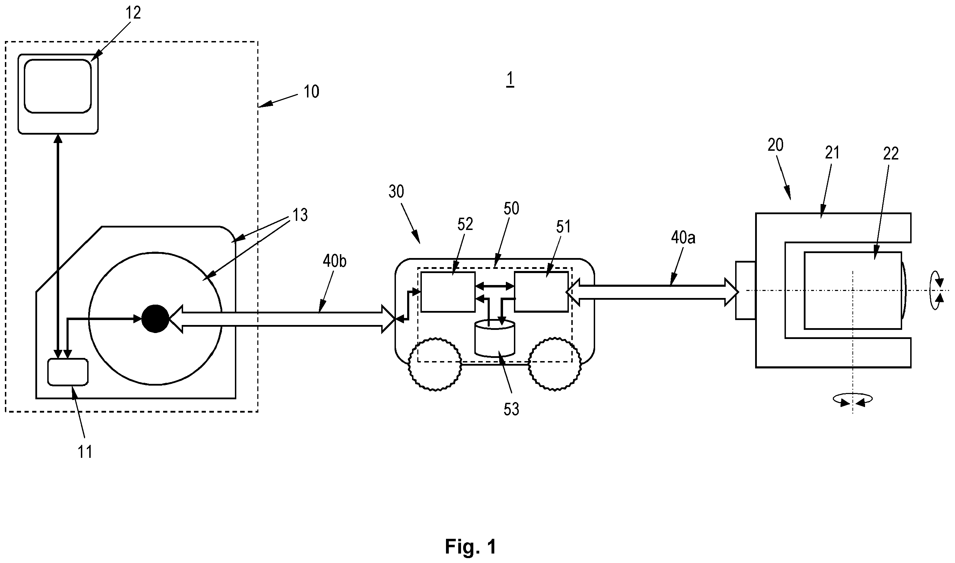

**Fig. 1** zeigt ein erstes Ausführungsbeispiel eines erfindungsgemäßen Rohrinspektions- und/oder Wartungssystems 1, welches eine Kontrolleinrichtung 10, eine Bildaufnahmeeinrichtung 20 und eine Vorschubeinrichtung 30 aufweist.

Die Vorschubeinrichtung 30 ist hier als Fahrwagen ausgebildet. Fahrwägen von Rohrinspektions- und/oder Wartungssystemen sind aus dem Stand der Technik bekannt und werden hier bis auf die erfindungswesentlichen Merkmale nicht näher beschrieben.

In dem Fahrwagen 30 ist eine Verarbeitungseinheit 50 angeordnet, die eine Signalverarbeitungseinrichtung 51, eine Signalübertragungseinrichtung 52 und gegebenenfalls eine Speichereinrichtung 53 aufweist. Die Verarbeitungseinheit 50 bzw. die Signalverarbeitungseinrichtung 51 ist über eine erste Kommunikationsverbindung 40a mit der Bildaufnahmeeinrichtung 20 gekoppelt. Bei der Bildaufnahmeeinrichtung 20 kann es sich um eine Fotokamera, eine Videokamera oder ein sonstiges Kamerasystem handeln, die Video- und/oder Bilddaten in digitaler oder analoger Form bereitstellen. Die Bildaufnahmeeinrichtung kann ein Gehäuse 21 aufweisen, in dem Kamerasystem angeordnet ist. Die Bildaufnahmeeinrichtung 20 bzw. das Kamerasystem 22 kann um eine Längsachse und/oder um eine Querachse drehbar sein. Alternativ oder zusätzlich kann die Bildaufnahmeeinrichtung 20 auch um eine Schwenkachse schwenkbar sein.

Die von dem Kamerasystem 22 bereitgestellten Bild- und /oder Videodaten werden in unverarbeiteter Form über die erste Kommunikationsverbindung 40a an die Verarbeitungseinheit 50 bzw. an die Signalverarbeitungseinrichtung 51 der Vorschubeinrichtung 30 übertragen. Je nachdem, ob das Kamerasystem 22 analoge oder digitale Bilddaten bereitstellt, werden für die erste Kommunikationsverbindung 40a entsprechende Übertragungsmedien verwendet.

Die Verarbeitungseinheit 50 bzw. die Signalverarbeitungseinrichtung 51 empfängt die digitalen bzw. analogen Bild- bzw. Videodaten, verarbeitet diese Daten und überträgt die verarbeiteten Daten mit Hilfe einer Signalübertragungseinrichtung 52 über eine zweite Kommunikationsverbindung 40b an die Kontrolleinrichtung 10.

Die Signalverarbeitungseinrichtung 51 der Vorschubeinrichtung 30 digitalisiert die empfangenen Bild- bzw. Videodaten, sofern diese in analoger Form von dem Kamerasystem 22 bereitgestellt werden, und bereitet die digitalisierten Daten für die Übertragung durch die Signalübertragungseinrichtung 52 auf. Vorteilhaft ist es, wenn die Bilddaten vor der Übertragung an die Kontrolleinrichtung 10 bzw. vor der Aufbereitung für die Übertragung von der Signalverarbeitungseinrichtung 51 komprimiert werden. Sofern die Video- bzw. Bilddaten von dem Kamerasystem 22 bereits in digitaler Form bereitgestellt werden, müssen diese lediglich für die Übertragung durch die Signalübertragungseinrichtung 52 aufbereitet und zuvor gegebenenfalls komprimiert werden.

Dadurch, dass die gesamte Verarbeitung und Aufbereitung der Bild- bzw. Videodaten durch die Verarbeitungseinheit 50 der Vorschubeinrichtung 30 durchgeführt wird, kann auf solche Verarbeitungseinheiten in der Bildaufnahmeeinrichtung 20 bzw. in dem Kamerasystem 22 verzichtet werden. Dadurch können unterschiedliche Bildaufnahmeeinrichtungen deutlich günstiger und weniger komplex bereitgestellt werden. Damit unterschiedliche Kamerasysteme bzw. Bildaufnahmeeinrichtungen mit verschiedenen physikalischen Schnittstellen an die Verarbeitungseinheit 50 angeschlossen werden können, ist es in einer Ausgestaltung der Erfindung vorteilhaft, wenn die Verarbeitungseinheit 50 bzw. die Signalverarbeitungseinrichtung 51 unterschiedliche physikalische Schnittstellen zur Verfügung stellt. Je nachdem über welche dieser Schnittstellen die Signalverarbeitungseinrichtung 51 die Bild- bzw. Videodaten der Bildaufnahmeeinrichtung 20 empfängt, können die Daten unterschiedlich aufbereitet werden. Je nach verwendeter Bildaufnahmeeinrichtung 20 können für die erste Kommunikationsverbindung 40a unterschiedliche Übertragungsmittel (beispielsweise Koaxialkabel, Twisted-Pair-Kabel, Glasfaserkabel oder andere Übertragungsmedien) verwendet werden.

In einer Ausgestaltung der Erfindung können die von der Signalverarbeitungseinrichtung 51 aufbereiteten und komprimierten Daten direkt an die Signalübertragungseinrichtung 52 zur Übertragung an die Kontrolleinrichtung 10 übertragen werden.

In einer alternativen Ausgestaltung können die von der Signalverarbeitungseinrichtung 51 aufbereiteten und komprimierten Daten in einer Speichereinrichtung 53 der Verarbeitungseinheit 50 gespeichert werden. Das Speichern der Daten in der Speichereinrichtung 53 ist dann vorteilhaft, wenn die Übertragung zwischen der Signalübertragungseinrichtung 52 und der Kontrolleinrichtung 10 gestört oder unterbrochen ist, beispielsweise aufgrund einer Beschädigung des Kabels der zweiten Kommunikationsverbindung 40b. Dadurch wird gewährleistet, dass keine Video- bzw. Bilddaten verlorengehen.

Es ist aber auch möglich, dass die Signalverarbeitungseinrichtung 51 die aufbereiteten und gegebenenfalls komprimierten Daten sowohl an die Signalübertragungseinrichtung 52 als auch an die Speichereinrichtung 53 überträgt. Dadurch ist gewährleistet, dass die gesamten von der Bildaufnahmeeinrichtung 20 bereitgestellten Daten unabhängig von einer erfolgreichen Übertragung an die Kontrolleinrichtung 10 gespeichert sind. Die in der Speichereinrichtung 53 gespeicherten Daten können dann gegebenenfalls nach dem Inspektions- bzw. Wartungsvorgang aus der Speichereinrichtung 53 ausgelesen werden. Das Auslesen der in der Speichereinrichtung 53 gespeicherten Daten kann dann wiederum über die Signalübertragungseinrichtung 52 abgewickelt werden.

Die Kontrolleinrichtung 10 umfasst bei der in Figur 1 gezeigten Ausgestaltung des erfindungsgemäßen Inspektionssystems 1 eine Kabeltrommel 13 und eine mit der Kabeltrommel 13 gekoppelte Anzeige-/Bedieneinheit 12. Die Kabeltrommel 13 dient zum Auf- bzw. Abwickeln eines Kabels, das die zweite Kommunikationsverbindung 40b bildet. An der Kabeltrommel 13 ist hier eine Signalempfangseinrichtung 11 angeordnet, die mit dem auf der Kabeltrommel 13 aufgewickelten Kabel gekoppelt ist und die die über die zweite Kommunikationsverbindung 40b übertragenen Bild- bzw. Videodaten empfängt. Andererseits ist die Signalempfangseinrichtung 11 mit der Anzeige-/Bedieneinheit 12 gekoppelt. Die von der Signalempfangseinrichtung 11 entgegengenommenen Bild- bzw. Videodaten können von dieser vor der Übertragung an die Anzeige-/Bedieneinheit 12 aufbereitet werden, etwa in ein für die Anzeigeeinheit 12 geeignetes Format konvertiert werden.

In einer Ausgestaltung der Erfindung kann die Signalempfangseinrichtung 11 mehrere verschiedene Anschlüsse aufweisen, sodass unterschiedliche Anzeige-/Bedieneinheiten 12 angeschlossen werden können. Damit wird auch hinsichtlich der Verwendbarkeit unterschiedlicher Anzeige-/Bedieneinheiten 12 ein größtmögliches Maß an Flexibilität erreicht.

Bei der zweiten Kommunikationsverbindung 40b kann es sich beispielsweise um ein Kupferkabel, etwa ein Twisted-Pair- oder ein Koaxialkabel, oder um einen Lichtwellenleiter handeln. Für die Übertragung der Daten von der Vorschubeinrichtung 30 über die zweite Kommunikationsverbindung 40b zur Kontrolleinrichtung 10 kann etwa das BroadR-Reach-Protocol verwendet werden, wobei die Signalübertragungseinrichtung 52 der Verarbeitungseinheit 50 der Vorschubeinrichtung 30 angepasst ist, die Bild- bzw. Videodaten in diesem Format bzw. gemäß diesem Protokoll zu übertragen.

In einer Ausgestaltung der Erfindung kann die Vorschubeinrichtung 30 Sensoren aufweisen bzw. kann die Vorschubeinrichtung 30 mit Sensoren gekoppelt sein. Die Sensordaten dieser Sensoren können ebenfalls der Signalverarbeitungseinrichtung 51 der Verarbeitungseinheit 50 zugeführt werden. Die Signalverarbeitungseinrichtung 51 kann die Sensordaten entsprechend aufbereiten und der Signalübertragungseinrichtung 52 für die Übertragung an die Kontrolleinrichtung 10 zur Verfügung stellen. Je nach verwendetem Übertragungsprotokoll können diese Sensordaten dann parallel über die zweite Kommunikationsverbindung 40b an die Kontrolleinrichtung 10 übertragen werden.

In einer weiteren Ausgestaltung der Erfindung ist es vorgesehen, dass die Vorschubeinrichtung 30 mit mehreren Bildaufnahmeeinrichtungen 20 gekoppelt ist. So kann beispielsweise ein Fahrwagen 30 mit zwei Bildaufnahmeeinrichtungen 20 gekoppelt sein, wobei eine Bildaufnahmeeinrichtung nach vorne und die andere Bildaufnahmeeinrichtung nach hinten ausgerichtet ist. Die Signalverarbeitungseinrichtung 51 ist hierbei angepasst, die Video- bzw. Bilddaten sämtlicher Bildaufnahmeeinrichtungen zu verarbeiten bzw. aufzubereiten und für die Übertragung an die Kontrolleinrichtung 10 der Signalübertragungseinrichtung 52 zur Verfügung zu stellen.

In einer Ausgestaltung der Erfindung sind die erste Kommunikationsverbindung 40a und die zweite Kommunikationsverbindung 40b bidirektional ausgestaltet, das heißt über diese beiden Kommunikationsverbindungen 40a, 40b kann eine bidirektionale Datenübertragung abgewickelt werden. Über die Anzeige-/Bedieneinheit 12 der Kontrolleinrichtung 10 kann so einerseits die Vorschubeinrichtung 30, beispielsweise der Fahrwagen, und/oder die Bildaufnahmeeinrichtung 20 gesteuert werden. Über die Signalempfangseinrichtung 11 der Kontrolleinrichtung 10 werden Kontroll- bzw. Steuerdaten der Bedieneinheit 12 in die zweite Kommunikationsverbindung 40b eingekoppelt. Die Signalübertragungseinrichtung 52 der Verarbeitungseinheit 50 ist hierbei angepasst, die Kontroll- bzw. Steuerdaten entgegenzunehmen und der Signalverarbeitungseinrichtung 51 zuzuführen. Die Signalverarbeitungseinrichtung 51 kann die entgegengenommenen Steuer- bzw. Kontrolldaten auswerten und den zu steuernden Komponenten des Fahrwagens zuführen. Sofern die Kontroll- bzw. Steuerdaten für die Steuerung der Bildaufnahmeeinrichtung 20 vorgesehen sind, können diese von der Signalverarbeitungseinrichtung 51 über die erste Kommunikationsverbindung 40a an die Bildaufnahmeeinrichtung 20 übertragen werden.

Vorteilhaft ist es, wenn die Kontroll- bzw. Steuerdaten Informationen umfassen, die angeben, für welche Komponente die jeweiligen Steuer- bzw. Kontrolldaten gedacht sind. Vorteilhaft ist es auch hierbei, wenn Steuer- bzw. Kontrolldaten mehrerer zu steuernder Komponenten parallel über die zweite Kommunikationsverbindung 40b an die Vorschubeinrichtung 30 übertragen werden können.

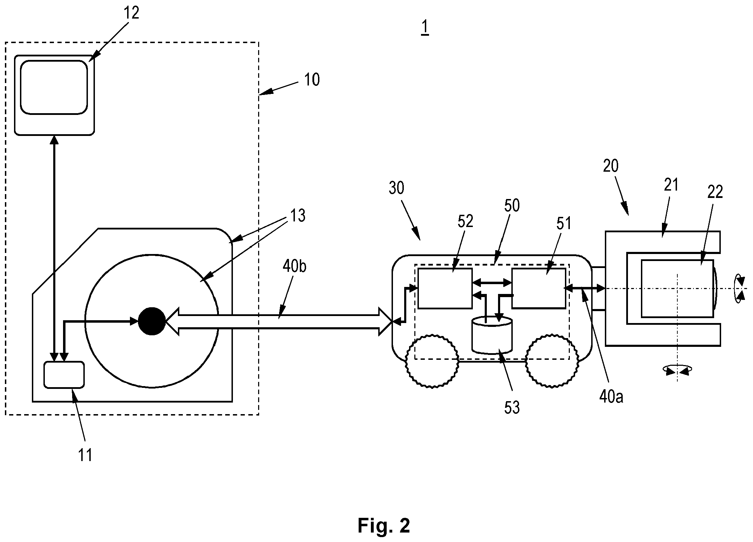

**Fig. 2** zeigt eine weitere Ausgestaltung eines erfindungsgemäßen Rohrinspektions- und/oder Wartungssystems 1. Während bei dem in Fig. 1 gezeigten System die Bildaufnahmeeinrichtung 20 etwa über einen Hebearm an dem Fahrwagen 30 befestigt ist und die Verarbeitungseinheit 50 des Fahrwagens über ein Kabel, das die erste Kommunikationsverbindung 40a bildet, mit der Bildaufnahmeeinrichtung gekoppelt ist, ist bei der in Fig. 2 gezeigten Ausgestaltung des Inspektionssystems 1 die Bildaufnahmeeinrichtung 20 direkt an dem Fahrwagen 30 angeordnet. Gegebenenfalls kann die gesamte Bildaufnahmeeinrichtung 20 um eine Längsachse rotierbar an dem Fahrwagen 30 angeordnet sein.

Die Bildaufnahmeeinrichtung 20 kann hier über Steckkontakte, die die erste Kommunikationsverbindung 40a bilden, mit der Verarbeitungseinheit 50 des Fahrwagens 30 gekoppelt sein, wobei die Bildaufnahmeeinrichtung 20 bei Bedarf von dem Fahrwagen 30 abgenommen und durch eine andere Bildaufnahmeeinrichtung 20 ersetzt werden kann.

Bis auf die unterschiedliche Anordnung der Bildaufnahmeeinrichtung 20 an dem Fahrwagen 30 entspricht das in Fig. 2 gezeigte Inspektionssystem 1 dem in Fig. 1 gezeigten System. Insofern wird auf die Beschreibung zu Fig. 1 verwiesen.

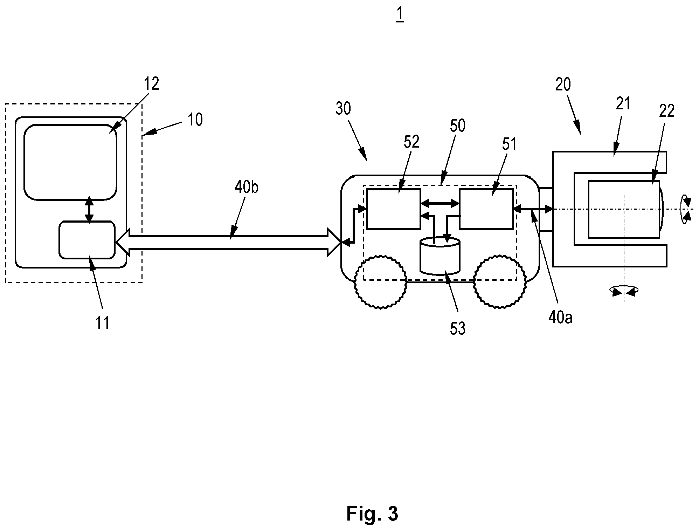

**Fig. 3** zeigt eine weitere erfindungsgemäße Ausgestaltung eines Rohrinspektions- und/oder Wartungssystems 1. Das in Fig. 3 gezeigte Inspektionssystem entspricht im Wesentlichen dem in Fig. 2 gezeigten System. Im Unterschied zu dem in Fig. 2 gezeigten System weist die in Fig. 3 gezeigte Kontrolleinrichtung 10 keine Kabeltrommel 13 auf. Die zweite Kommunikationsverbindung 40b ist hier direkt mit der Signalempfangseinrichtung 11 der Kontrolleinrichtung 10 gekoppelt, die hier Bestandteil der Anzeige-/Bedieneinheit 12 ist. In einer alternativen Ausgestaltung kann die Signalempfangseinrichtung 11 auch außerhalb der Anzeige-/Bedieneinheit 12 angeordnet sein und als separate Einheit mit der Anzeige-/Bedieneinheit 12 gekoppelt sein.

Im Übrigen wird auf die Beschreibung zu Fig. 1 und Fig. 2 verwiesen.

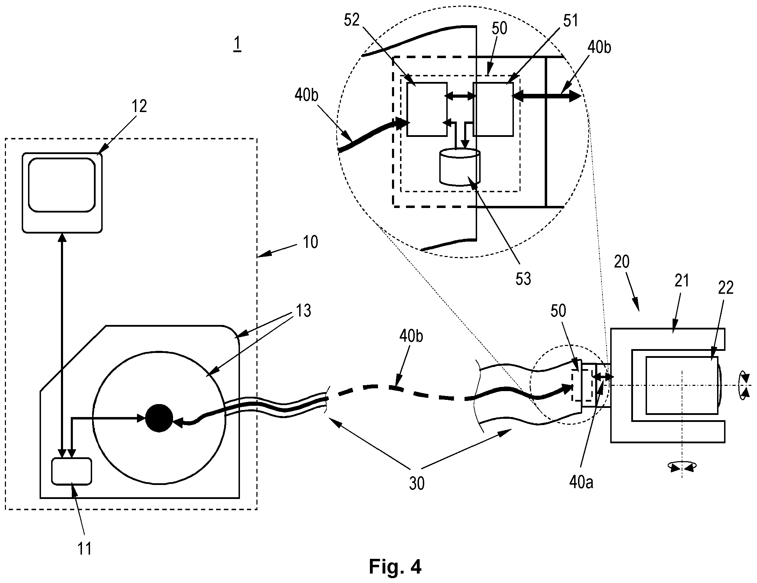

**Fig. 4** zeigt eine weitere erfindungsgemäße Ausgestaltung eines Rohrinspektions- und/oder Wartungssystems 1.

Im Unterschied zu den in Fig. 1 bis Fig. 3 gezeigten Systemen weist das in Fig. 4 gezeigte System 1 anstelle eines Fahrwagens einen Schiebeaal 30 als Vorschubeinrichtung auf. Der Schiebeaal 30 kann von einer Kabeltrommel 13 abgewickelt bzw. auf diese aufgewickelt werden. An dem freien Ende des Schiebeaals 30 ist eine Verarbeitungseinheit 50 angeordnet, an der wiederum die Bildaufnahmeeinrichtung 20 angeordnet ist. Die Bildaufnahmeeinrichtung 20 ist hierbei lösbar an dem freien Ende des Schiebeaals 30 bzw. an der Verarbeitungseinheit 50 angeordnet, sodass auch der Schiebeaal 30 mit unterschiedlichen Bildaufnahmeeinrichtungen 20 bestückt werden kann.

In dem Schiebeaal 30 sind Daten- bzw. Signalleitungen angeordnet, die die zweite Kommunikationsverbindung 40b zwischen der Verarbeitungseinheit 50 und der Kontrolleinrichtung 10 bilden.

Kontrolleinrichtungsseitig sind die Daten- bzw. Signalleitungen der zweiten Kommunikationsverbindung 40b mit einer an der Kabeltrommel 13 angeordneten Signalempfangseinrichtung 11 gekoppelt. Alternativ kann hier die Signalempfangseinrichtung 11 auch Bestandteil der Anzeige-/Bedieneinheit 12 sein, sodass die Daten- bzw. Signalleitungen der zweiten Kommunikationsverbindung 40b auch direkt mit der Anzeige-/Bedieneinheit 12 gekoppelt sein können.

Die Verarbeitungseinheit 50 entspricht hier der in Fig. 1 bis Fig. 3 gezeigten Verarbeitungseinheit 50. Über Steckverbindungen, die die erste Kommunikationsverbindung 40a zwischen der Verarbeitungseinheit 50 und der Bildaufnahmeeinrichtung 20 bilden, kann die Bildaufnahmeeinrichtung 20 an dem freien Ende des Schiebeaals 30 befestigt werden.

Sämtliche der vorstehend gezeigten Ausgestaltungen eines erfindungsgemäßen Rohrinspektions- und/oder Wartungssystems 1 haben den Vorteil, dass unterschiedliche Kamerasysteme bzw. Bildaufnahmeeinrichtungen 20 an der Vorschubeinrichtung (Fahrwagen oder Schiebeaal) angeordnet werden können, da die Aufbereitung der Video- bzw. Bilddaten und deren Weiterverarbeitung in der Signalverarbeitungseinrichtung 51 der Verarbeitungseinheit 50 erfolgt, die in die Vorschubeinrichtung 30 integriert ist. Durch die Verarbeitung bzw. Aufbereitung der Bild- bzw. Videodaten in der Verarbeitungseinheit 50 der Vorschubeinrichtung 30 können handelsübliche Bildaufnahmeeinrichtungen 20 verwendet werden, die ohne weitere Anpassungen mit der Vorschubeinrichtung 30 gekoppelt werden können.

Bei entsprechender Ausgestaltung der Signalempfangseinrichtung 11 können auch kontrolleinrichtungsseitig unterschiedliche Anzeige-/Bedieneinheiten 12 verwendet werden, da die Signalempfangseinrichtung 11 die Aufbereitung und Verarbeitung der empfangenen Video- bzw. Bilddaten für die Anzeige-/Bedieneinheit 12 übernimmt.

### Bezugszeichen:

- 1: Rohrinspektions- und/oder Wartungssystem (kurz Inspektionssystem)
- 10: Kontrolleinrichtung des Inspektionssystems 1
- 11: Signalempfangseinrichtung der Kontrolleinrichtung 10
- 12: Anzeige-/Bedieneinheit der Kontrolleinrichtung 10
- 13: Kabeltrommel der Kontrolleinrichtung 10
- 20: Bildaufnahmeeinrichtung
- 21: Gehäuse der Bildaufnahmeeinrichtung 20
- 22: Kamerasystem bzw. Kamera der Bildaufnahmeeinrichtung 20 (Videokamera oder Fotokamera, digital oder analog)
- 30: Vorschubeinrichtung (z.B. Fahrwagen oder Schiebeaal)
- 40a: erste Kommunikationsverbindung (zwischen der Bildaufnahmeeinrichtung 20 und der Vorschubeinrichtung)
- 40b: zweite Kommunikationsverbindung (zwischen der Kontrolleinrichtung 10 und der Vorschubeinrichtung)
- 50: Verarbeitungseinheit der Vorschubeinrichtung 30
- 51: Signalverarbeitungseinrichtung der Verarbeitungseinheit 50
- 52: Signalübertragungseinrichtung der Verarbeitungseinheit 50
- 53: Speichereinrichtung der Verarbeitungseinheit 50

## Patentansprüche

1. Rohrinspektions- und/oder Wartungssystem (1) zur Inspektion und/oder Wartung eines Rohres, aufweisend eine Kontrolleinrichtung (10), eine Bildaufnahmeeinrichtung (20) und eine Vorschubeinrichtung (30), wobei
- die Bildaufnahmeeinrichtung (20) mit der Vorschubeinrichtung (30) mechanisch, vorzugsweise lösbar, koppelbar ist, um mit der Vorschubeinrichtung (30) die Bildaufnahmeeinrichtung (20) in dem Rohr zu bewegen,
- die Bildaufnahmeeinrichtung (20) und die Vorschubeinrichtung (30) über eine erste Kommunikationsverbindung (40a) miteinander operativ verbunden sind,
- die Vorschubeinrichtung (30) und die Kontrolleinrichtung (10) über eine zweite Kommunikationsverbindung (40b) miteinander operativ verbunden sind,
- die Vorschubeinrichtung (30) eine Verarbeitungseinheit (50) aufweist, die mit der ersten Kommunikationsverbindung (40a) und mit der zweiten Kommunikationsverbindung (40b) operativ verbunden ist, wobei die Verarbeitungseinheit (50) angepasst ist,
- Bilddaten der Bildaufnahmeeinrichtung (20) über die erste Kommunikationsverbindung (40a) zu empfangen,
- die empfangenen Bilddaten zu verarbeiten, und
- die verarbeiteten Bilddaten über die zweite Kommunikationsverbindung (40b) an die Kontrolleinrichtung (10) zu übertragen.

2. System nach dem vorhergehenden Anspruch, wobei die Verarbeitungseinheit (50) zumindest eine Signalverarbeitungseinrichtung (51) und eine mit dieser operativ verbundenen Signalübertragungseinrichtung (52) aufweist, wobei
- die Signalverarbeitungseinrichtung (51) angepasst ist, die Bilddaten der Bildaufnahmeeinrichtung (20) zu empfangen, die empfangenen Bilddaten zu verarbeiten und die verarbeiteten Bilddaten an die Signalübertragungseinrichtung (52) zu übertragen, und
- die Signalübertragungseinrichtung (52) angepasst ist, die von der Signalverarbeitungseinrichtung (51) empfangenen Bilddaten an die Kontrolleinrichtung (10) zu übertragen.

3. System nach dem vorhergehenden Anspruch, wobei das Verarbeiten der von der Signalverarbeitungseinrichtung (51) empfangenen Bilddaten
- ein Digitalisieren von analog empfangenen Bilddaten und ein Komprimieren der digitalisierten Bilddaten, oder
- ein Komprimieren von digital empfangenen Bilddaten umfasst, wobei die Signalverarbeitungseinrichtung (51) zum Komprimieren der Bilddaten eine Komprimierungseinheit aufweist.

4. System nach einem der vorhergehenden Ansprüche, wobei die zweite Kommunikationsverbindung (40b) zumindest abschnittsweise ein Kupferkabel oder ein Glasfaserkabel ist.

5. System nach einem der beiden vorhergehenden Ansprüche, wobei die Signalübertragungseinrichtung (52) angepasst ist, die digitalisierten und komprimierten Bilddaten gemäß einem vorbestimmten Übertragungsstandard, insbesondere BroadR-Reach, an die Kontrolleinrichtung (10) zu übertragen, wobei die Signalverarbeitungseinrichtung (51) oder die Signalübertragungseinrichtung (52) weiter angepasst sind, die digitalisierten und komprimierten Bilddaten gemäß dem vorbestimmten Übertragungsstandard aufzubereiten.

6. System nach einem der vorhergehenden Ansprüche, wobei die Kontrolleinrichtung (10) eine Signalempfangseinrichtung (11) und eine Anzeige-/Bedieneinheit (12) aufweist, wobei die Signalempfangseinrichtung (11) mit der zweiten Kommunikationsverbindung (40b) gekoppelt ist und angepasst ist
- die Bilddaten von der Signalübertragungseinrichtung (52) zu empfangen, und
- die empfangenen Bilddaten zu verarbeiten und für die Anzeige an der Anzeige-/Bedieneinheit (12) aufzubereiten.

7. System nach dem vorhergehenden Anspruch, wobei die Kontrolleinrichtung (10) ferner eine Kabeltrommel (13) aufweist, an der die Signalempfangseinrichtung (11) angeordnet ist.

8. Verfahren zur Datenübertragung in einem Rohrinspektions- und/oder Wartungssystem (1), wobei das Rohrinspektions- und/oder Wartungssystem (1) zumindest eine Kontrolleinrichtung (10), eine Bildaufnahmeeinrichtung (20) und einer Vorschubeinrichtung (30) aufweist, wobei
- von der Bildaufnahmeeinrichtung (20) aufgenommene Bilddaten über eine erste Kommunikationsverbindung (40a) von der Bildaufnahmeeinrichtung (20) an die Vorschubeinrichtung (30) übertragen werden,
- eine Verarbeitungseinheit (50) der Vorschubeinrichtung (30)
- die empfangenen Bilddaten verarbeitet, und
- die verarbeiteten Bilddaten über eine zweite Kommunikationsverbindung (40b) an die Kontrolleinrichtung (10) überträgt,
wobei die Bildaufnahmeeinrichtung (20) und die Vorschubeinrichtung (30) lösbar miteinander gekoppelt werden.

9. Verfahren nach dem vorhergehenden Anspruch, wobei
- eine Signalverarbeitungseinrichtung (51) der Verarbeitungseinheit (50) die Bilddaten der Bildaufnahmeeinrichtung (20) empfängt, die empfangenen Bilddaten verarbeitet und die verarbeiteten Bilddaten an eine Signalübertragungseinrichtung (52) der der Verarbeitungseinheit (50) überträgt, und
- die Signalübertragungseinrichtung (52) die von der Signalverarbeitungseinrichtung (51) empfangenen Bilddaten an die Kontrolleinrichtung (10) zu überträgt,
wobei beim Verarbeiten der von der Signalverarbeitungseinrichtung (51) empfangenen Bilddaten
- analog empfangene Bilddaten digitalisiert und die digitalisierten Bilddaten komprimiert werden, oder
- digital empfangene Bilddaten komprimiert werden.

10. Verfahren nach dem vorhergehenden Anspruch, wobei die Signalübertragungseinrichtung (52) die digitalisierten und komprimierten Bilddaten gemäß einem vorbestimmten Übertragungsstandard, insbesondere BroadR-Reach, an die Kontrolleinrichtung (10) überträgt, wobei die Signalverarbeitungseinrichtung (51) oder die Signalübertragungseinrichtung (52) die digitalisierten und komprimierten Bilddaten gemäß dem vorbestimmten Übertragungsstandard aufbereiten.

11. Verfahren nach einem der vorhergehenden Ansprüche 8 bis 10, wobei eine Signalempfangseinrichtung (11) der Kontrolleinrichtung (10) die Bilddaten von der Signalübertragungseinrichtung (52) empfängt und die empfangenen Bilddaten für die Anzeige an einer Anzeige-/Bedieneinheit (12) Kontrolleinrichtung (10) aufbereitet.
